# EUROPEAN PATENT APPLICATION

(11) **EP 4 682 274 A1**
(43) Date of publication of application: **21.01.2026**
(21) Application number: 24189171.2
(22) Date of filing: 17.07.2024
(51) Int. Cl.: C22B 7/00, B01J 23/42, B01J 23/44, B01J 23/46, C01B 21/26, C22B 11/02

(54) **SYSTEM FOR RECOVERING VOLATILE PT, PD AND/OR RH AND METHOD THEREOF**

(71) Applicant: Yara International ASA, 0277 Oslo (NO)
(72) Inventor: WALLER, David, 3931 Porsgrunn (NO)
(74) Representative: De Clercq & Partners

(57) **Abstract**

The present disclosure discloses a catalytic system comprising a Pt-containing, Pd-containing and/or Rh-containing catalyst, and an oxide-based recovery system downstream of the catalyst, wherein the oxide-based recovery system comprises one or more oxides of transition metals selected from the group consisting of iron, manganese, cobalt, tantalum, niobium, vanadium, molybdenum, scandium, titanium and chromium and wherein, upon contact with volatile Pt, Pd, and/or Rh, the oxides of the transition metals are able to bond with at least one of Pt, Pd and Rh, particularly with Pt and/or Rh, more particularly with Rh or Rh and Pt, particularly as evaluated by EDS analysis. The present disclosure further relates to the use of one or more oxides of transition metals for recovering volatile Pt, Pd and/or Rh, and to a method for recovering volatile Pt, Pd and/or Rh from the solid composition comprising the oxides of transition metals and Pt, Pd and/or Rh.

## Description

### TECHNICAL FIELD

The present application is in the field of the recovery of volatile precious metals, particularly volatile Pt, Pd and/or Rh from a gas phase.

### BACKGROUND

Several reactions require a catalyst to proceed at an acceptable rate and to produce the desired products. Such catalysts are often based upon precious, heavy metals, such as the platinum group metals. The six platinum group metals are ruthenium (Ru), rhodium (Rh), palladium (Pd), osmium (Os), iridium (Ir), and platinum (Pt).

For example, platinum (Pt), palladium (Pd) and/or rhodium (Rh) are commonly used as catalysts among others in the Ostwald process for nitric acid production, for oxidising ammonia into nitric oxide, and in the Andrussow process for hydrogen cyanide production, for reacting ammonia with oxygen and methane.

A problem associated with catalysis using platinum group metals, particularly Pt, Pd and/or Rh, is due to the high operating temperatures at which catalysis is performed, for example from 700 to 950°C or over 1000°C or over 1100°C. At these temperatures these metals become volatile and evaporate, in particular when the catalysis is performed in the presence of oxygen. These metals on evaporation are carried downstream and in absence of a suitable catchment system they would be lost in the plant or acid product. The loss of these metals is minimized by the use of a catchment system positioned downstream of the catalyst.

The recovery of volatile Pt, in particular, with palladium (Pd)-containing recovery systems is well documented. For example, GB1343637 relates to a process and a related device for recovering platinum metals entrained in a hot gas stream (as in the manufacture of nitric acid) wherein the gas is passed through a gettering device in the form of an inert ceramic honeycomb structure which is coated with a getter containing Pd to absorb the volatile platinum.

EP63450 generally discloses a getter device and a related process for recovery of a precious metal lost from a precious metal-containing catalyst operating at elevated temperature, wherein the getter comprises an agglomeration or assemblage of unwoven fibers made from a metal selected from the group of ruthenium, palladium, iridium, platinum, gold, silver, rhodium and alloys containing one or more or the said metals. The document primarily focuses on Pd/Au alloys. GB668935 relates to a process and related device for platinum recovery of volatilized platinum, originating from a catalyst. In this context, GB668935 claims a process for recovery of platinum, wherein the platinum is trapped on the surface of baffles, disposed at a place where the temperature is at least 700°C and wherein some of the baffles have a coating of silver or of a silver alloy with gold, palladium or platinum.

US20130149207 relates to an exhaust system arrangement comprising a combination of Pt and Pd catalyst and a downstream SCR catalyst and a component capable of trapping and/or alloying with a gas phase platinum group metal, wherein this component is typically a metal selected from the group consisting of gold, palladium and silver, preferably a Pd/Au alloy.

On the side of Rh capture, US4774069A discloses a process for the manufacture of nitric oxide by oxidising ammonia in the presence of a catalyst comprising Pt and from 0 to 20 wt. % of Rh and from 0 to 40 wt. % of Pd (based on the weight of alloy), the catalyst being located upstream from a catchment trap for scavenging Pt or Rh lost from the catalyst. The catchment trap comprises at least one layer of interstitial elongated elements made from Pd or an alloy of Pd supported on at least one layer of interstitial ceramics material such that there is little if any bonding between the elongated elements and the ceramics material and the elongated elements are easily separated from the ceramics material when the time comes to recover the scavenged Pt and Rh. The document further mentions that the ceramic material is stable at temperatures from 800 to 1200°C and is inert to the metals of the platinum group, especially Pt, Rh and Pd. The suitable ceramics can be oxides, borides, carbides, silicides, nitrides and silicates of aluminum, zirconium, boron, silicon, magnesium, titanium, yttrium, beryllium, thorium, manganese, lanthanum, scandium, calcium, uranium, chromium, niobium and hafnium.

The precious metals such as platinum, palladium and rhodium are expensive. Moreover, rhodium capture is significantly less documented than platinum capture, which indicates that it is more challenging to achieve. Nonetheless, at the moment the most expensive precious metal is Rh. Thus, it is of great interest to recover as much volatile Pt, Pd and/or Rh as possible. There is thus a need in the art for compounds and materials for recovering volatile Pt, Pd and/or Rh and that are stable under ambient air.

### SUMMARY

The present application addresses one or more of the above indicated needs. The inventor has surprisingly found that certain metal oxides, particularly oxides of transition metals, as further defined herein, are stable and effective recovery agents for recovering or trapping at least volatile Pt, Pd and/or Rh or at least volatile Rh. However, as will be shown in the examples, the inventor has established that not all metal oxides are suitable for recovering volatile Pt, Pd and/or Rh.

In one aspect of the disclosure, a catalytic system is disclosed. The system comprises:
- a Pt-containing, Pd-containing and/or Rh-containing catalyst; and
- an oxide-based recovery system downstream of the catalyst wherein the oxide-based recovery system comprises one or more metal oxides, in particular one or more oxides of transition metals selected from the group consisting of iron, manganese, cobalt, tantalum, niobium, vanadium, molybdenum, scandium, titanium and chromium, and wherein, upon contact with volatile Pt, Pd, and/or Rh, the oxides of the transition metals are able to bond with at least one of Pt, Pd and Rh, particularly with Pt and/or Rh, more particularly with Rh or Rh and Pt, particularly as evaluated by EDS analysis.

The catalytic system is characterised in that the recovery system comprises one or more transition metal oxides selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, wherein the recovery system comprises a non-stoichiometric oxide of formula Fe₁₋ₓO with 0<x<0.1, or wherein the recovery system comprises a mixed oxide selected from the group consisting of Co₃₋ₓFeₓO₄, Co₃₋ₓMnₓO₄ and Mn₃₋ₓFeₓO₄ with 0<x<3, particularly wherein the one or more transition metal oxides are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly selected from the group consisting of Fe₂O₃, Mn₃O₄, Co₃O₄, Ta₂O₅, Nb₂O₅.

In one embodiment according to the system of the disclosure, the recovery system comprises one or more transition metal oxides selected from the group consisting of MnO, Sc₂O₃, and TiO₂, and wherein the recovery system comprises palladium in a concentration ranging from 0 to 40 wt%, particularly in a concentration ranging from 0 to 30 wt% or from 0 to 20 wt%, with wt% based on total weight of the any Pd and transition metal oxide.

In one embodiment according to the system of the disclosure, the catalytic system is a system for the catalytic conversion of ammonia into nitric oxide, for the generation of nitric acid, and present in an ammonia oxidation burner, or the catalytic system is a system for the catalytic conversion of ammonia, oxygen and methane into hydrogen cyanide, and present in a reactor for reacting ammonia, oxygen and methane, thereby generating hydrogen cyanide.

In one embodiment according to the system of the disclosure, the catalytic system comprises a Rh-containing catalyst.

In a particular embodiment according to the system of the disclosure, the recovery system comprises oxides of transition metals selected from the group consisting of Fe₂O₃, Mn₃O₄, Co₃O₄, Ta₂O₅, Nb₂O₅ and the catalytic system comprises a Rh-containing catalyst.

In one embodiment according to the system of the disclosure, the Pt-containing, Pd-containing and/or Rh-containing catalyst is in the form of a catalytic gauze, and wherein the recovery system has the shape of a honeycomb, a tablet, a pellet, a sponge, a foam, a net, a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminium-iron alloys.

In one aspect of the disclosure, the use of one or more metal oxides, in particular one or more oxides of transition metals selected from the group consisting of iron, manganese, cobalt, tantalum, niobium, vanadium, molybdenum, scandium, titanium and chromium for recovering volatile Pt, Pd and/or Rh, particularly for recovering volatile Pt and/or Rh, more particularly for recovering volatile Rh, or volatile Rh and Pt, is disclosed.

In one embodiment according to the use of the disclosure, the oxides of transition metals are selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, or wherein the oxide of transition metal is a non-stoichiometric oxide of formula Fe₁₋ₓO, with 0<x<0.1 or a mixed oxide selected from the group consisting of Co₃₋ₓFeₓO₄, Co₃₋ₓMnₓO₄, Mn₃₋ₓFeₓO₄ with O<x<3; particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅.

In one embodiment according to the use of the disclosure, the volatile Pt, Pd and/or Rh is generated during the catalytic oxidation of ammonia into nitric oxide, or the volatile Pt, Pd and/or Rh is generated during the catalytic reaction of ammonia with oxygen and methane, thereby generating hydrogen cyanide.

In one embodiment according to the use of the disclosure, one or more oxides of transition metals are selected from the group consisting of Fe₂O₃, Mn₃O₄, Co₃O₄, Ta₂O₅, Nb₂O₅ for recovering volatile Rh.

In one embodiment according to the use of the disclosure, the oxides of transition metals are comprised in a recovery system that has the shape of a honeycomb, a tablet, a pellet, a sponge, a foam, a net, a gauze, a coating on a ceramic support or a metallic support.

In one embodiment according to the use of the disclosure, the oxides of transition metals are comprised in a recovery system that has the shape of a honeycomb, a tablet, a pellet, a sponge, a foam, a net, a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminum-iron alloys.

In one aspect of the disclosure, a method for oxidising ammonia into nitric oxide or for reacting ammonia with oxygen and methane, thereby generating hydrogen cyanide, is disclosed. The method comprises the steps of:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pt, Pd and/or Rh is generated, particularly with a Rh-containing catalytic system;
b) contacting the volatile Pt, Pd and/or Rh generated in step a) with an oxide-based recovery system comprising one or more oxides of transition metals selected from the group consisting of iron, manganese, cobalt, tantalum, niobium, vanadium, molybdenum, scandium, titanium and chromium; and
c) forming a solid composition comprising the oxides of transition metals and Pt, Pd and/or Rh, wherein the oxides of transition metals are bonded with Pt, Pd and/or Rh, particularly with Rh and/or Pt, more particularly with Rh or with Rh and Pt, particularly as determined by EDS analysis. In one embodiment according to the method of the disclosure, the method further comprises the step of
d) recovering Pt, Pd and/or Rh from the solid composition comprising the oxides of transition metals and Pt, Pd and/or Rh.

In one embodiment according to the method of the disclosure, in step b) the oxides of transition metals are selected from the group consisting of FeO, Fe₂O₃, Fe₃O₄, MnO, Mn₃O4, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, or wherein the oxide of transition metal is a non-stoichiometric oxide of formula Fe₁₋ₓO with 0<x<0.1 or a mixed oxide selected from the group consisting of Co₃₋ₓFeₓO₄, Co₃₋ₓMnₓO₄, Mn₃₋ₓFeₓO₄ with 0<x<3; particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅.

In one embodiment according to the method of the disclosure, the oxide-based recovery system comprises one or more transition metal oxides selected from the group consisting of MnO, Sc₂O₃, and TiO₂, and wherein the oxide-based recovery system comprises palladium in a concentration ranging from 0 to 40 wt%, particularly in a concentration ranging from 0 to 30 wt% or from 0 to 20 wt%, with wt% based on total weight of any Pd and transition metal oxide.

In one embodiment according to the method of the disclosure, step a) is performed with a catalytic gauze, and step b) is performed with a recovery system that has the shape of a honeycomb, a tablet, a pellet, a sponge, a foam, a net, a gauze, a coating on a ceramic support or a metallic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, chromium-aluminium-iron alloys.

In one embodiment according to the method of the disclosure, step a) is performed with a Rh-containing catalytic system and step b) is performed with a recovery system comprising one or more oxide of Fe₂O₃, Mn₃O₄, Co₃O₄, Ta₂O₅, Nb₂O₅.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

The present application generally provides methods and systems for the recovery of one or more volatile platinum group metals present in a gas phase.

As used herein, the terms "recover"/"recovery" are used interchangeably with the terms "capture", "capturing", "catchment", "retain", "retaining", "entrapping" or "trapping", "gettering" or "scavenging".

These terms are used in the meaning that the element that is recovered or captured by a recovery system according to the present application is incorporated into the transition metal oxide crystal lattice or forms a compound or a solid composition with the transition metal oxide. The recovery or capture of a particular element by a recovery system according to the present application can be determined by scanning electron microscope (SEM) coupled with energy dispersive X-ray fluorescence analysis (EDS) and/or by X-Ray diffraction (XRD) analysis, particularly by comparing the data obtained by these techniques before and after contacting the recovery system according to the present application with a gas comprising one or more volatile platinum group metals, in particular Pt, Pd and/or Rh. EDS analysis will demonstrate the presence or absence of the metal of interest to be recovered in the recovery system. XRD shows the effect of the incorporation of the metal of interest to be recovered in the recovery system, particularly in the crystal structure of the recovery agent, as further described herein, or as a formed compound or a solid composition with the recovery agent.

In one aspect of the disclosure, a catalytic system is disclosed. In general, the catalytic system comprises a catalyst comprising one or more platinum group metals, and a recovery system, positioned downstream of the catalyst, for recovering volatile platinum group metals that are released from the catalyst during operation.

In particular, the system according to the present disclosure comprises a Pt-containing, Pd-containing and/or Rh-containing catalyst and an oxide-based recovery system downstream of the catalyst wherein the oxide-based recovery system comprises one or more oxides of transition metals selected from the group consisting of iron, manganese, cobalt, tantalum, niobium, vanadium, molybdenum, scandium, titanium and chromium. The system is characterised in that, upon contact with volatile Pt, Pd, and/or Rh, the oxides of the transition metals are able to bond with at least one of Pt, Pd and Rh, particularly with Pt and/or Rh, more particularly with Rh or Rh and Pt, particularly as evaluated by EDS analysis.

By a catalytic system, it is meant herein, a system comprising a catalyst, with which the chemical activation barrier for reacting two chemicals is lowered, such that the reaction can be performed using less energy. The catalyst as considered herein typically comprises at least Pt, Pd and/or Rh, but may contain other metals or metal containing compounds as well, including but not limited to other platinum group metals, such as Pd, Ir, Ru, Os; and/or other metals, such as Au, Ag, Cu, Fe, Ni, Co and the like; and/or compounds or alloys containing one or more of said metals. In the context of the present disclosure, during operation of the catalyst, at least Pt, Pd and/or Rh is liberated in the gas phase, in other words volatile Pt, Pd and/or Rh is generated.

By recovery system, it is meant a system in which the volatile catalyst metal, in particular the volatile platinum group metal, more in particular, volatile Pt, Pd and/or Rh, present in the gas phase and generated during a catalytic reaction in the catalytic system is recovered, as defined above. The recovery system according to the present disclosure particularly recovers or at least Pt, Pd and/or Rh or at least Rh, through retaining or capturing with the transition metal oxide as further defined herein, in particular by incorporating Pt, Pd and/or Rh into the crystal lattice of the transition metal oxide to form a solid composition comprising the oxides of transition metals and Pt, Pd and/or Rh. The inventor has surprisingly found that certain metal oxides, in particular oxides of transition metals, selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃ retain volatile Pt, Pd and Rh, thereby allowing to recover the volatile Pt, Pd and Rh that would otherwise be lost in the gas phase. Thereby, both emissions in the air and loss of precious and expensive metals are mitigated. It was further observed that in contrast to the above-mentioned metal oxides, certain metal oxides for instance, CeO₂ did not retain volatile Pt, Pd and Rh. Hence, only certain metal oxides, in particular oxides of transition metals such as FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, have the ability to complex with Pt, Pd and/ or Rh. Advantageously, the formed complexes are stable such that upon shut-down of the reactor and exposure to ambient temperature and ambient air, the complexes do not hydrate and do not become brittle and dusty. The system is characterised in that the recovery system comprises one or more oxides of transition metals, as defined above, in a crystalline form.

In one embodiment according to the system of the disclosure, the catalytic system is an ammonia oxidation burner, wherein nitric oxide is generated. In one embodiment, the catalytic system is a reactor for reacting ammonia, oxygen and methane, thereby generating hydrogen cyanide. Stated differently, in certain embodiments, the catalytic system is a system for the catalytic conversion of ammonia into nitric oxide, for the generation of nitric acid, or the catalytic system is a system for the catalytic conversion of ammonia, oxygen and methane, for the generation of hydrogen cyanide. The present invention thus considers an ammonia oxidation burner comprising a catalytic system according to the present disclosure, or a reactor for the manufacture of hydrogen cyanide by the catalytic reaction of ammonia, methane and oxygen, comprising a catalytic system according to the present disclosure.

The present disclosure addresses the recovery of at least volatile Pt, Pd and/or Rh from a gas phase. Two very well know industrial production processes are the production of nitric acid according to the Ostwald process and the production of hydrogen cyanide according to the Andrussow process. Both these processes involve the presence of a Pt, Pd and/or Rh containing catalyst. Indeed, in the production of nitric acid according to the Ostwald process, the first step involves the reaction of gaseous ammonia with gaseous oxygen provided for example through air with a Pt/Pd/Rh catalyst, thereby producing gaseous nitric oxide. The catalyst comprising Pt, Pd and/or Rh usually is part of an ammonia oxidation burner in which the Pt/Pd/Rh catalyst is located at the top surface of a burner basket and supported by Raschig rings or catalyst particles for example for N₂O gas conversion and abatement located inside the burner basket. After contacting the Pt/Pd/Rh catalyst, the ammonia and oxygen react at suitable temperatures and pressures as known to the skilled person to form gaseous nitric oxide, which passes through the burner basket and is further subject to the subsequent steps of the nitric acid production process. EP3727667A1 and WO2004/005187A1 describe potential designs for the ammonia oxidation burner basket. Regarding the production of hydrogen cyanide according to the Andrussow process, it also involves the reaction of gaseous ammonia, oxygen and methane that are fed to a reactor and subsequently reacted in the reactor with a catalyst bed comprising Pt/Pd/Rh gauzes at suitable temperatures and pressures as known to the skilled person.

It results that the catalytic system of the disclosure is particularly helpful for performing the Ostwald and Andrussow processes generating nitric acid and hydrogen cyanide respectively, particularly for recovering at least volatile Pt, Pd and/or Rh generated during the Ostwald and Andrussow processes.

In one embodiment according to the system of the disclosure, the recovery system comprises one or more oxides of transition metals selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃. The inventor has found that the catchment of volatile Pt, Pd and Rh is increased when the recovery system comprises oxides of transition metals selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃, and even more increased when the recovery system comprises oxides of transition metals selected from Fe₂O₃, Mn₃O₄, Co₃O₄, Ta₂O₅, Nb₂O₅. Said otherwise, there are benefits in terms of volatile Pt, Pd and Rh recovery associated with a recovery system comprising Fe₂O₃, Mn₃O₄, Co₃O₄, Ta₂O₅, Nb₂O₅.

In one embodiment according to the system of the disclosure, the catalytic system comprises a Rh-containing catalyst.

In certain embodiments according to the system of the disclosure, the recovery system comprises Fe₂O₃, Mn₃O₄, Co₃O₄, Ta₂O₅, Nb₂O₅ and the catalytic system comprises a Rh-containing catalyst.

The inventor has found that not only does the recovery of volatile Pt, Pd and/or Rh improve upon using Fe₂O₃, Mn₃O₄, Co₃O₄, Ta₂O₅, Nb₂O₅ in the recovery system, the Rh recovery is also then improved, that is more selective, with respect to Pt or Pd catchment. Said otherwise, the combination of a Rh containing catalyst and Fe₂O₃, Mn₃O₄, Co₃O₄, Ta₂O₅, Nb₂O₅ in the recovery system of the system of the disclosure results in improved Rh recovery.

The inventor has further found that the certain non-stoichiometric oxides of transition metals, in particular a non-stoichiometric oxide of iron having formula Fe₁₋ₓO with 0<x<0.1 can retain volatile Pt, Pd and/or Rh, thereby allowing to recover the volatile Pt, Pd and/or Rh that would otherwise be lost in the gas phase. The non-stoichiometric oxides, as defined herein, are any solid chemical compounds of transition metals in which the number of atoms of the particular transition metal, in particular iron, cannot be expressed in a ratio of a small whole number. As such the atomic ratios are represented in the form of small integers.

In one embodiment according to the system of the disclosure, the recovery system comprises a non-stoichiometric oxide of formula Fe1-xO with 0<x<0.1.

In a particular embodiment of the disclosure, the non-stoichiometric oxide of formula Fe₁₋ₓO is Fe_{0.95}O.

The inventor has additionally found that certain mixed oxides of transition metals, in particular mixed oxides of iron, manganese and cobalt, can retain volatile Pt, Pd and Rh, thereby allowing to recover the volatile Pt, Pd and/or Rh that would otherwise be lost in the gas phase. The mixed oxide, as defined herein, is an oxide that contains cations of more than one chemical element or cations of a single element in several states of oxidation. Stated differently, the mixed oxide is an oxide with more than one metal in the oxide structure.

In one embodiment according to the system of the disclosure, recovery system comprises a mixed oxide selected from the group consisting of Co₃₋ₓFeₓO₄, Co₃₋ₓMnₓO₄ and Mn₃₋ₓFeₓO₄ with 0<x<3.

In one embodiment according to the system of the disclosure, the system is such that, upon contact with volatile Pt, Pd, and/or Rh, the oxides of the transition metals, as defined herein, are able to bond with at least one of Pt, Pd and Rh, particularly with Pt and/or Rh, more particularly with Rh or Rh and Pt, particularly as evaluated by EDS analysis.

The term "bond" or "bonding" is not limited to a particular type of interaction. In a particular embodiment, this bonding is such that the catalyst metal, which is recovered by a recovery system according to the present disclosure, is incorporated into the transition metal oxide crystal lattice or forms a compound or a solid composition with the transition metal oxide. The ability of a transition metal oxide to bond with at least one of Pt, Pd and/or Rh, may be assessed by scanning electron microscope (SEM) coupled with energy dispersive X-ray fluorescence analysis (EDS) and/or by X-Ray diffraction (XRD) analysis. The presence or absence of Pt, Pd and/or Rh can be demonstrated, particularly by comparing the data obtained by these techniques before and after contacting the recovery system according to the present application with a gas comprising one or more volatile platinum group metals, in particular Pt, Pd and/or Rh.

As known to the skilled person, the analytical technique of using SEM coupled with EDS analysis and/or by XRD analysis, is known to study the surface topography and morphology of materials such as metals, composite, polymers, and ceramics. EDS analysis demonstrates the presence or absence of the metal of interest to be recovered in the recovery system. XRD shows the effect of the incorporation of the metal of interest to be recovered in the recovery system, particularly in the crystal structure of the recovery agent, as further described herein, or as a formed compound or a solid composition with the recovery agent.

The examples of this disclosure demonstrate the presence or absence of Pt, Pd and/or Rh in a sample of the oxide-based recovery system and thereby indicate the presence or absence of a bond between the oxides of the transition metals and Pt, Pd and/or Rh. In particular, the atomic % being less than 0.1%, or less than 0.05% or less than 0.01% in a sample of the oxide-based recovery system indicates the absence of a bond between the oxides of the transition metals and Pt, Pd and/or Rh. In addition, the examples of this disclosure demonstrate that CeO2, does not retain or bond or interact with the Pt, Pd and/or Rh.

In certain embodiments, the recovery system comprising FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, according to the present disclosure may further comprise other metals, compounds or alloys suitable for the capture of volatile catalyst metals, such as volatile platinum group metals. Such metals or compounds include but are not limited to Pd, Au, Ag, and mixtures of alloys thereof. While it is preferred that these metals, compounds or alloys are absent in the oxide-based recovery system, it is possible to have very small or trace amounts of them in the oxide-based recovery system, i.e. they are present as an impurity. Stated differently, the recovery system of the present disclosure may further comprise trace amounts of palladium.

In certain embodiments, the recovery system comprising one or more transition metal oxides selected from the group consisting of MnO, Sc₂O₃, and TiO₂ according to the present disclosure comprises palladium in a concentration ranging from 0 to 40 wt%, particularly in a concentration ranging from 0 to 30 wt% or from 0 to 20 wt%, with wt% based on total weight of the any Pd and transition metal oxide.

In one embodiment according to the system of the disclosure, the Pt-containing, Pd-containing and/or Rh-containing catalyst is in the form of a catalytic gauze, and the recovery system has the shape of a honeycomb, a tablet, a pellet, a sponge, a foam, a net, a gauze, a coating on a ceramic support or a metallic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminum silicates and silicon carbides. The non-limiting examples of metallic support can be metal mesh, metal screens, ferritic steels, nickel-based alloys, iron-chromium-aluminium alloys and chromium-aluminium-iron alloys.

Honeycomb monoliths and nets offer a large geometric surface area and also very low pressure drop, which is of benefit for the gas to contact either the Pt, Pd and/or Rh catalytic metal or transition oxide recovery metal.

Gauzes also offer the advantage of low pressure drop, in addition to high mass transfer which favours both the catalytic conversion onto the Pt, Pd and/or Rh metal and the interaction of the volatile Pt, Pd and/or Rh with the transition metal oxide, resulting in the retaining of the volatile Pt, Pd and/or Rh by the transition metal oxide.

The shape of pellets or tablets can be adjusted and optimised such as to offer a maximised geometric surface area. Further, pellets and tablets are easy to produce, and large volumes can be easily installed and subsequently used in large sized reactors such as circular ammonia oxidation burners.

Sponges, foams and ceramics also offer a large geometric surface area and also exhibit a very low pressure drop, which is of benefit for the gas to contact either the Pt, Pd and/or Rh catalytic metal or the transition metal oxide. Moreover, sponges, foams and ceramics present the advantage of increased mass transfer with respect to other shapes.

When the recovery system has the shape of a honeycomb, a tablet, a pellet or a net, the recovery system can be made by coating the transition metal oxide onto a support having the preferred shape. Coating of the transition metal oxide onto a support with a defined shape is particularly straightforward to perform and to achieve.

Alternatively, the shape of the recovery system can be produced by extrusion, moulding, pressing, granulating the oxides of transition metals, depositing or coating of oxides or mixed oxides of transition metals onto a support.

In one aspect of the disclosure, the use of one or more oxides of transition metals selected from the group consisting of iron, manganese, cobalt, tantalum, niobium, vanadium, molybdenum, scandium, titanium and chromium for recovering volatile Pt, Pd and/or Rh, particularly for recovering volatile Pt and/or Rh, more particularly for recovering volatile Rh, or volatile Rh and Pt is disclosed.

The inventor has surprisingly found that, contrary to certain metal oxides such as cerium oxide, CeO₂ and as shown in the examples, the oxides of transition metals selected from FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, retain volatile Pt, Pd and Rh, thereby recovering the volatile Pt, Pd and Rh that would otherwise be lost in the gas phase. Thereby, both emissions in the air and loss of precious and expensive metals are mitigated.

Hence, FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃ have the ability to complex with Pt, Pd and/or Rh. Further, the formed complexes are stable such that upon shut-down of the reactor and exposure to ambient temperature and ambient air, the complexes do not hydrate and do not become brittle and dusty. In one embodiment according to the use of the disclosure, volatile Pt, Pd and/or Rh is generated during the catalytic oxidation of ammonia into nitric oxide, particularly using a Pt, Pd and Rh containing catalyst, or volatile Pt, Pd and/or Rh is generated during the catalytic reaction of ammonia with oxygen and methane, thereby generating hydrogen cyanide. In particular, the present disclosure addresses the recovery of volatile Pt, Pd and Rh. Two very well-known industrial production processes are the production of nitric acid according to the Ostwald process and the production of hydrogen cyanide according to the Andrussow process, as described elsewhere herein.

It is seen that the use of certain metal oxides, in particular, transition metal oxides selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃ for recovering volatile Pt, Pd and/or Rh, is particularly helpful for performing the Ostwald and Andrussow processes generating nitric acid and hydrogen cyanide, respectively.

The inventor has found that the catchment of volatile Pt, Pd and/or Rh is increased when the transition metal oxides in the recovery system are selected from FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and even more increased when the transition metal oxides in the recovery system are selected from Fe₂O₃, Mn₃O₄, Co₃O₄, Ta₂O₅, Nb₂O₅. Said otherwise, there are benefits in terms of volatile Pt, Pd and/or Rh recovery associated with a recovery system comprising Fe₂O₃, Mn₃O₄, Co₃O₄, Ta₂O₅, Nb₂O₅.

In one embodiment according to the use of the disclosure, the oxides of transition metals are selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅. In one embodiment according to the use of the disclosure, the recovery associated with a recovery system comprising Fe₂O₃, Mn₃O₄, Co₃O₄, Ta₂O₅, Nb₂O₅ for recovery of Rh is disclosed.

In a particular embodiment according to the use of the disclosure, the oxide of transition metal is a non-stoichiometric oxide of formula Fe₁₋ₓO, with 0<x<0.1.

In a particular embodiment according to the use of the disclosure, the non-stoichiometric oxide of formula Fe₁₋ₓO is Fe_{0.95}O.

In one embodiment according to the use of the disclosure, a mixed oxide selected from the group consisting of Co₃₋ₓFeₓO₄, Co₃₋ₓMnₓO₄, Mn₃₋ₓFeₓO₄ with 0<x<3.

In one embodiment according to the use of the disclosure, the transition metal oxide is comprised in a recovery system that has the shape of a honeycomb, a tablet, a pellet, a sponge, a foam, a net, a gauze, a coating on a ceramic support or a metallic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminum silicates and silicon carbides. The non-limiting examples of metallic support can be metal mesh, metal screens, ferritic steels, nickel-based alloys, iron-chromium-aluminium alloys, chromium-aluminium-iron alloys.

In one aspect of the disclosure, a method for oxidising ammonia into nitric oxide or for reacting ammonia with oxygen and methane, thereby generating hydrogen cyanide, is disclosed. The method comprises the steps of
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pt, Pd and/or Rh is generated, particularly with a Rh-containing catalytic system or stated differently whereby a gas phase is obtained comprising at least volatile Pt, Pd and/or Rh;
b) contacting the volatile Pt, Pd and/or Rh generated in step a) with an oxide-based recovery system comprising one or more oxides of transition metals selected from the group consisting of iron, manganese, cobalt, tantalum, niobium, vanadium, molybdenum, scandium, titanium and chromium; and
c) forming a solid composition comprising the oxides of transition metals and Pt, Pd and/or Rh, wherein the oxides of transition metals are bonded with Pt, Pd and/or Rh, particularly with Rh and/or Pt, more particularly with Rh or with Rh and Pt, particularly as determined by EDS analysis. In one embodiment according to the method of the disclosure, the method further comprising the step of
d) recovering Pt, Pd and/or Rh from the solid composition comprising the oxides of transition metals and Pt, Pd and/or Rh.

The inventor has surprisingly found that, contrary to certain metal oxides such as cerium oxide, CeO₂ and as shown in the examples, FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃ retain volatile Pt, Pd and Rh, thereby recovering the volatile Pt, Pd and Rh that would otherwise be lost in the gas phase. Thereby, both emissions in the air and loss of precious and expensive metals are mitigated. Hence, FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃ have the ability to complex with Pt, Pd and/or Rh. Further, the formed complexes are stable such that upon shut-down of the reactor and exposure to ambient temperature and ambient air, the complexes do not hydrate and do not become brittle and dusty.

In one embodiment according to the method of the disclosure, step a) is performed with a catalytic gauze, and step b) is performed with a recovery system that has the shape of a honeycomb, a tablet, a pellet, a sponge, a foam, a net, a gauze, a coating on a ceramic support or a metallic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminum silicates and silicon carbides. The non-limiting examples of metallic support can be metal mesh, metal screens, ferritic steels, nickel-based alloys, iron-chromium-aluminium alloys and chromium-aluminium-iron alloys.

In one embodiment according to the method of the disclosure, step b) is performed with a recovery system comprising FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃. The inventor has found that the catchment of volatile Pt, Pd and Rh is increased when the transition metal oxides in the recovery step are selected from FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and even more increased when the transition metal oxides in the recovery step are selected from Fe₂O₃, Mn₃O₄, Co₃O₄, Ta₂O₅, Nb₂O₅. Said otherwise, there are benefits in terms of volatile Pt, Pd and Rh recovery associated with a recovery step are selected from Fe₂O₃, Mn₃O₄, Co₃O₄, Ta₂O₅, Nb₂O₅.

In one embodiment according to the method of the disclosure, in step b) the oxides of transition metals are selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅.

In one embodiment according to the method of the disclosure, in step b) the oxide of transition metal is a non-stoichiometric oxide of formula Fe₁₋ₓO with 0<x<0.1.

In a particular embodiment according to the method of the disclosure, in step b) the non-stoichiometric oxide of formula Fe₁₋ₓO is Fe_{0.95}O.

In one embodiment according to the method of the disclosure, in step b) the oxide of transition metal is a mixed oxide selected from the group consisting of Co₃₋ₓFeₓO₄, Co₃₋ₓMnₓO₄, Mn₃₋ₓFeₓO₄ with 0<x<3;

In one embodiment according to the method of the disclosure, step a) is performed with a Rh-containing catalytic system and step b) is performed with a recovery system comprising Fe₂O₃, Mn₃O₄, Co₃O₄, Ta₂O₅, Nb₂O₅.

The inventor has found that not only does the recovery of volatile Pt, Pd and/or Rh improve upon using Fe₂O₃, Mn₃O₄, Co₃O₄, Ta₂O₅, Nb₂O₅ in the recovery step, the Rh recovery is also then improved, that is more selective, with respect to Pt and Pd catchment. Said otherwise, the combination of a Rh catalyst and Fe₂O₃, Mn₃O₄, Co₃O₄, Ta₂O₅, Nb₂O₅ in the recovery step of the method of the disclosure results in improved Rh recovery.

In certain embodiments according to the method of the disclosure, the recovery system comprising FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, according to the present disclosure may further comprise other metals, compounds or alloys suitable for the capture of volatile catalyst metals, such as volatile platinum group metals. Such metals or compounds include but are not limited to Pd, Au, Ag, and mixtures of alloys thereof. While it is preferred that these metals, compounds or alloys are absent in the oxide-based recovery system, it is possible to have very small or trace amounts of them in the oxide-based recovery system, i.e. they are present as an impurity. Stated differently, the recovery system of the present disclosure may further comprise trace amounts of palladium.

In one embodiment according to the method of the disclosure, the oxide-based recovery system comprises one or more transition metal oxides selected from the group consisting of MnO, Sc₂O₃, and TiO₂, and wherein the oxide-based recovery system comprises palladium in a concentration ranging from 0 to 40 wt%, particularly in a concentration ranging from 0 to 30 wt% or from 0 to 20 wt%, with wt% based on total weight of any Pd and transition metal oxide.

In one embodiment according to the method of the disclosure, step a) comprises catalytically oxidising ammonia into nitric oxide at a temperature ranging from 700 to 1100°C, more preferably from 700 to 950°C, particularly at a pressure ranging between 2 bar and 20 bar.

By performing the conversion of ammonia into nitric oxide under such conditions, not only are the yield and the selectivity for nitric oxide improved, the emissions associated with the nitrous oxide side product are reduced. Further, nitric oxide can then be converted through further oxidation into the NOx gases NO₂ and N₂O₄ which when absorbed in water provide the very important chemical that is nitric acid.

### EXAMPLES

### Example 1: use of Fe₂O₃ for Pt, Pd and/or Rh catchment

Iron oxide (Fe₃O₄) was pressed into pellets of 10mm diameter and 5mm thickness. The pellets were sintered at 1100°C for 12 hours. Fe₃O₄ oxide after sintering at 1100°C in air converts to Fe₂O₃. Two pellets were installed downstream of Pt, Pd and/or Rh gauzes in an ammonia combustion reactor. One pellet of each composition was retained as a fresh reference sample. The reactor was operated at 5.7 bara pressure and the combusted gas contacting the Fe₂O₃ tablet was at 892°C, containing circa 10% NO, 15% H₂O, 6% O₂ and nitrogen.

In addition to these gases, the gas contained traces of volatile platinum, palladium and/or rhodium. The reactor was operated for 5½ month campaign. After this period of exposure, the pellet was recovered from the pilot reactor for analysis. Prior to installation in the reactor, the lower side of the pellet had been marked, so that after exposure the upper side of the pellet that had most direct contact with the incoming flow of combusted gas (upper surface) could be identified.

Analysis in a scanning electron microscope (SEM) with energy dispersive X-ray fluorescence analysis (EDS) was carried out. To obtain an average chemical composition of the near surface region of the upper side, EDS analysis of the tablet was carried out at low magnification. The normalised atomic ratios for Fe, Pt, Pd and Rh are shown in Table 1.

**Table 1. EDS analysis of the upper surface of the Fe₂O₃ pellet**

| **Fe atomic %** | **Rh atomic %** | **Pd atomic %** | **Pt atomic %** |
|---|---|---|---|
| 89.63 | 9.6 | 0.6 | 0.2 |

These results show that Pt, Pd and Rh were recovered, with more Rh being recovered.

### Example 2: use of Mn₃O₄ for Rh catchment

Manganese oxide (Mn₃O₄) pellet was produced from Mn₃O₄ powder, in the same manner as the corresponding Fe₂O₃ pellet produced in Example 1. After sintering the pellets at 1100°C for 12hours, and marking of the lower surface, the pellet was installed in the reactor in the same manner as the corresponding Fe₂O₃ pellet produced in Example 1. The exposure of the Mn₃O₄ pellet in the reactor was carried out in parallel with the Fe₂O₃ pellet produced in Example 1. Average surface compositions of Mn, Pt, Pd and Rh after exposition in the reactor was determined in the SEM equipped with an EDS analyser. The results are shown in Table 2.

**Table 2. EDS analysis of the upper surface of the Mn₂O₄ pellet**

| **Mn atomic %** | **Rh atomic %** | **Pd atomic %** | **Pt atomic %** |
|---|---|---|---|
| 96.5 | 3.1 | 0.2 | 0.2 |

The results show that more Rh was recovered on the Mn₃O₄ pellet, contrary to Pd and Pt.

### Example 3: use of Co₃O₄ for Rh catchment

A cobalt oxide (Co₃O₄) pellet was prepared from Co₃O₄ powder in the same manner as the corresponding Fe₂O₃ pellet produced in Example 1 and the Mn₃O₄ pellets produced in Example 2, with the exception of a lower sintering temperature of 900°C for 12 hours. After sintering and marking of the lower surface, the pellet was installed in the reactor in the same manner as the corresponding Fe₂O₃ pellet produced in Example 1. The exposure of the Co₃O₄ pellet in the reactor was carried out in parallel with the Fe₂O₃ pellet produced in Example 1. Average surface compositions of Co, Rh, Pd and Pt after exposition in the reactor was determined in the SEM equipped with an EDS analyser. The results are shown in Table 3.

**Table 3. EDS analysis of the upper surface of the Co₃O₄**

| **Co atomic %** | **Rh atomic %** | **Pd atomic %** | **Pt atomic %** |
|---|---|---|---|
| 96.5 | 4.1 | 0.0 | 0.1 |

From Table 3, it was observed that Rh had been retained on the Co₃O₄ pellet, contrary to Pd and Pt.

### Example 4: use of Ta₂O₅ for Rh catchment

A Tantalum oxide (Ta₂O₅) pellet was prepared from Ta₂O₅ powder in the same manner as the corresponding Fe₂O₃ pellet produced in Example 1. After sintering at 1100°C for 12 hours, and marking of the lower surface, the pellet was installed in the reactor in the same manner as the corresponding Fe₂O₃ pellet produced in Example 1. The exposure of the Ta₂O₅ pellet in the reactor was carried out in parallel with the Fe₂O₃ pellet produced in Example 1. Average surface compositions of Ta, Rh, Pd and Pt after exposition in the reactor was determined in the SEM equipped with an EDS analyser. The results are shown in Table 4.

**Table 4. EDS analysis of the upper surface of the Ta₂O₅**

| **Ta atomic %** | **Rh atomic %** | **Pd atomic %** | **Pt atomic %** |
|---|---|---|---|
| 97.1 | 2.7 | 0.2 | 0.0 |

From Table 4, it was observed that Rh had been retained on the Ta₂O₅ pellet, contrary to Pd and Pt.

### Example 5: use of Nb₂O₅ for Rh catchment

A niobium oxide (Nb₂O₅) pellet was prepared from Nb₂O₅ powder in the same manner as the corresponding Fe₂O₃ pellet produced in Example 1. After sintering at 1100°C for 12 hours, and marking of the lower surface, the pellet was installed in the reactor in the same manner as the corresponding Fe₂O₃ pellet produced in Example 1. The exposure of the Nb₂O₅ pellet in the reactor was carried out in parallel with the Fe₂O₃ pellet produced in Example 1. Average surface compositions of Nb, Rh, Pd and Pt after exposition in the reactor was determined in the SEM equipped with an EDS analyser. The results are shown in Table 5.

**Table 5. EDS analysis of the upper surface of the Nb₂O₅**

| **Nb atomic %** | **Rh atomic %** | **Pd atomic %** | **Pt atomic %** |
|---|---|---|---|
| 96.2 | 3.8 | 0.0 | 0.0 |

From table 5, it was observed that Rh had been retained on the Nb₂O₅ pellet, contrary to Pd and Pt.

### Example 6: no catchment of Pt, Pd or Rh with appropriate metal oxide (comparative example)

Under ambient conditions, cerium dioxide is found in the form of cerium dioxide, CeO₂, with a fluorite structure. Pellets of cerium dioxide were produced in the same way as Examples 1-2 and 4-5, with pellets produced from cerium dioxide and sintered at 1100°C for 12 hours.

**Table 6. EDS analysis of the upper surface of CeO2**

| **Ce atomic %** | **Rh atomic %** | **Pd atomic %** | **Pt atomic %** |
|---|---|---|---|
| 98.9 | 0.1 | 0.1 | 0.0 |

From table 6, it was observed that CeO₂ does not retain Pt, Pd or Rh.

## Claims

1. A catalytic system comprising:
• a Pt-containing, Pd-containing and/or Rh-containing catalyst; and
• an oxide-based recovery system downstream of the catalyst
wherein the oxide-based recovery system comprises one or more oxides of transition metals selected from the group consisting of iron, manganese, cobalt, tantalum, niobium, vanadium, molybdenum, scandium, titanium and chromium, and wherein, upon contact with volatile Pt, Pd, and/or Rh, the oxides of the transition metals are able to bond with at least one of Pt, Pd and Rh, particularly with Pt and/or Rh, more particularly with Rh or Rh and Pt, particularly as evaluated by EDS analysis.

2. The system according to claim 1, wherein the recovery system comprises one or more transition metal oxide selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, wherein the recovery system comprises a non-stoichiometric oxide of formula Fe₁₋ₓO with 0<x<0.1, or wherein the recovery system comprises a mixed oxide selected from the group consisting of Co₃₋ₓFeₓO₄, Co₃₋ₓMnₓO₄ and Mn₃₋ₓFeₓO₄ with 0<x<3, particularly wherein the one or more transition metal oxides are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly selected from the group consisting of Fe₂O₃, Mn₃O₄, Co₃O₄, Ta₂O₅, Nb₂O₅.

3. The catalytic system according to claim 1 or 2, wherein the recovery system comprises one or more transition metal oxides selected from the group consisting of MnO, Sc₂O₃, and TiO₂, and wherein the recovery system comprises palladium in a concentration ranging from 0 to 40 wt%, particularly in a concentration ranging from 0 to 30 wt% or from 0 to 20 wt%, with wt% based on total weight of any Pd and transition metal oxide.

4. The system according to any one of claims 1 to 3, wherein the catalytic system is a system for the catalytic conversion of ammonia into nitric oxide, for the generation of nitric acid, or wherein the catalytic system is a system for the catalytic conversion of ammonia, oxygen and methane, for the generation of hydrogen cyanide.

5. The system according to claim 4, wherein the catalytic system comprises a Rh-containing catalyst.

6. The system according to any one of claims 1 to 5, wherein the Pt-containing, Pd- containing and/or Rh-containing catalyst is in the form of a catalytic gauze, and wherein the recovery system has the shape of a honeycomb, a tablet, a pellet, a sponge, a foam, a net, a gauze, a coating on a ceramic support or a metallic support.

7. Use of one or more oxides of transition metals selected from the group consisting of iron, manganese, cobalt, tantalum, niobium, vanadium, molybdenum, scandium, titanium and chromium for recovering volatile Pt, Pd and/or Rh, particularly for recovering volatile Pt and/or Rh, more particularly for recovering volatile Rh, or volatile Rh and Pt.

8. The use according to claim 7, wherein the oxides of transition metals are selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, or wherein the oxides of transition metals is a non-stoichiometric oxide of formula Fe₁₋ₓO, with 0<x<0.1 or a mixed oxide selected from the group consisting of Co₃₋ₓFeₓO₄, Co₃₋ₓMnₓO₄, Mn₃₋ₓFeₓO₄ with 0<x<3; particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅.

9. The use according to claim 7 or 8, wherein volatile Pt, Pd and/or Rh is generated during the catalytic oxidation of ammonia into nitric oxide, or wherein volatile Pt, Pd and/or Rh is generated during the catalytic reaction of ammonia with oxygen and methane, thereby generating hydrogen cyanide.

10. The use according to any one of claims 7 to 9, wherein the oxides of transition metals are comprised in a recovery system that has the shape of a honeycomb, a tablet, a pellet, a sponge, a foam, a net, a gauze, a coating on a ceramic support or a metallic support.

11. A method for oxidising ammonia into nitric oxide or for reacting ammonia with oxygen and methane, thereby generating hydrogen cyanide, comprising the steps of:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pt, Pd and/or Rh is generated, particularly with a Rh-containing catalytic system;
b) contacting the volatile Pt, Pd and/or Rh generated in step a) with an oxide-based recovery system comprising one or more oxides of transition metals selected from the group consisting of iron, manganese, cobalt, tantalum, niobium, vanadium, molybdenum, scandium, titanium and chromium; and
c) forming a solid composition comprising the oxides of transition metals and Pt, Pd and/or Rh, wherein the oxides of transition metals are bonded with Pt, Pd and/or Rh, particularly with Rh and/or Pt, more particularly with Rh or with Rh and Pt, particularly as determined by EDS analysis.

12. The method according to claim 11, further comprising the step of
d) recovering Pt, Pd and/or Rh from the solid composition comprising the oxides of transition metals and Pt, Pd and/or Rh.

13. The method according to claim 11 or 12, wherein in step b) the oxides of transition metals are selected from the group consisting of FeO, Fe₂O₃, Fe₃O₄, MnO, Mn₃O₄, Mn₂O₃, MnO₂, CoO, Co₃O₄, Ta₂O₅, NbO, NbO₂, Nb₂O₅, V₂O₅, MoO₃, Sc₂O₃, TiO₂, Cr₂O₃, or wherein the oxides of transition metals is a non-stoichiometric oxide of formula Fe₁₋ₓO with 0<x<0.1 or a mixed oxide selected from the group consisting of Co₃₋ₓFeₓO₄, Co₃₋ₓMnₓO₄, Mn₃₋ₓFeₓO₄ with O<x<3; particularly wherein the oxides of transition metals are selected from the group consisting of FeO, Fe₂O₃, Fe₃O₄, Mn₃O₄, Mn₂O₃, MnO₂, CoO, Co₃O₄, Ta₂O₅, NbO, NbO₂, Nb₂O₅, V₂O₅, MoO₃, Cr₂O₃ and more particularly wherein the oxides of transition metals are selected from the group consisting of Fe₂O₃, Mn₃O₄, Co₃O₄, Ta₂O₅, Nb₂O₅.

14. The method according to any one of claims 11 to 13, wherein the oxide-based recovery system comprises one or more transition metal oxides selected from the group consisting of MnO, Sc₂O₃, and TiO₂, and wherein the oxide-based recovery system comprises palladium in a concentration ranging from 0 to 40 wt%, particularly in a concentration ranging from 0 to 30 wt% or from 0 to 20 wt%, with wt% based on total weight of any Pd and transition metal oxide.

15. The method according to any one of claims 11 to 14, wherein step a) is performed with a catalytic gauze, and wherein step b) is performed with a recovery system that has the shape of a honeycomb, a tablet, a pellet, a sponge, a net, a gauze, a coating on a ceramic support or a metallic support.
